Europäisches Patentamt

European Patent Office

Office européen des brevets

(19)

(11) Numéro de publication: **0 029 774**
**A1**

(12) **DEMANDE DE BREVET EUROPEEN**

(21) Numéro de dépôt: **80401631.9**

(22) Date de dépôt: **14.11.80**

(51) Int. Cl.³: **F 16 L 37/10**
**F 16 L 37/24**

(30) Priorité: **15.11.79 FR 7928161**

(43) Date de publication de la demande:
**03.06.81 Bulletin 81/22**

(84) Etats Contractants Désignés:
**AT BE CH DE FR GB IT LI LU NL SE**

(71) Demandeur: **Gleizes, Raymond Marc Xavier**
**29 bis rue de Soisy**
**F-95600 Eaubonne(FR)**

(72) Inventeur: **Gleizes, Raymond Marc Xavier**
**29 bis rue de Soisy**
**F-95600 Eaubonne(FR)**

(74) Mandataire: **Arnaud, Jean Pierre Alfred**
**94 rue Saint-Lazare**
**F-75009 Paris(FR)**

(54) **Dispositif de raccordement étanche de tronçons de canalisation et tronçon de canalisation muni d'un tel dispositif.**

(57) L'invention concerne un dispositif de raccordement étanche de deux tronçons (30,32) cylindriques creux.

Un dispositif de raccordement comporte une partie femelle (34) et une partie mâle (36) coopérant par deux surfaces d'appui (44), (56), dont l'une a une gorge (46) logeant un joint torique (64). Les forces de maintien des deux parties l'une sur l'autre sont telles que, dans chaque demi-plan axial, la résultante des forces a une composante parallèle à l'axe du dispositif qui recoupe le joint.

Application aux pipelines et canalisations de transport de gaz ou de minerai.

FIG. 2

## Dispositif de raccordement étanche et tronçon de canalisation.

La présente invention concerne un dispositif de raccordement étanche de tronçons cylindriques creux, par exemple de canalisations, et des tronçons de canalisation comportant un tel dispositif.

Plus précisément, l'invention concerne un dispositif de raccordement étanche capable de supporter des pressions et des températures élevées, de 100 bars et 100°C et plus, sans détérioration et sans que ses qualités mécaniques et d'étanchéité soient diminuées, même au cours d'essais soumettant les dispositifs à des chocs thermiques, à de nombreux cycles de mise en pression et à un vieillissement accéléré.

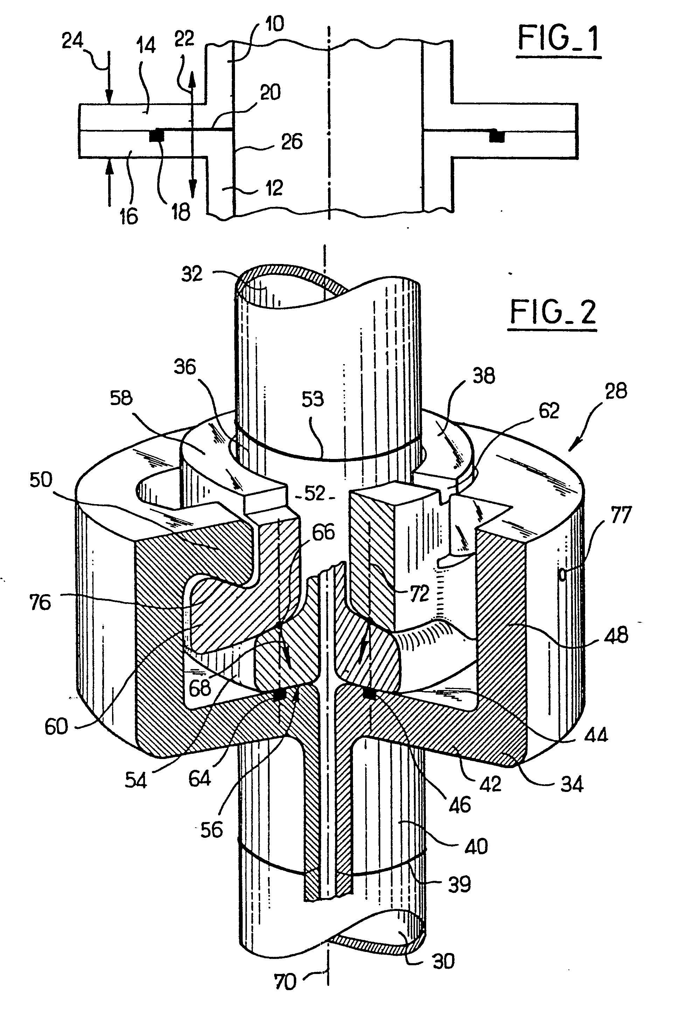

La figure 1 est une coupe schématique d'un dispositif de raccordement du type général auquel se rapporte l'invention. Sur cette figure, deux tronçons de tuyauterie 10 et 12 comportent chacun une bride 14, 16 et l'étanchéité entre les deux brides est assurée par un joint torique 18 logé dans une gorge convenable formée dans l'une des brides 14, 16. Etant donné que l'étanchéité n'est assurée qu'au niveau du joint torique 18, le fluide transporté par une canalisation formée par les tronçons 10 et 12 peut pénétrer jusqu'au joint 18 comme indiqué par la référence 20. Ce fluide sous pression, agissant sur les surfaces des deux brides 14 et 16, provoque l'application de forces d'écartement représentées par leur résultante 22. Les forces d'écartement sont contrecarrées habituellement par application de forces de maintien représentées par la résultante 24. Etant donné que, au niveau de chaque bride, les forces 22 et 24 ont des sens opposés, dans chaque plan de coupe, par exemple comme représenté sur la figure 1, chaque bride est soumise à un couple de forces qui a tendance à écarter le joint 18 de la surface en regard.

Le brevet britannique n° 820 113 décrit un dispositif de raccordement du type général considéré, dans lequel un joint est placé très près de la surface interne 26 des tronçons de canalisation afin que la résultante 22 soit réduite, par réduction de la surface d'application de la pression du fluide. Cependant, la force de maintien des deux brides est appliquée radialement vers l'extérieur par rapport au joint si bien que, lorsque le fluide contenu par la canalisation formée par les tronçons 10 et 12 de tube est à une pression élevée, les deux surfaces d'appui ont tendance à s'écarter et à réduire les propriétés d'étanchéité. En outre, dans ce brevet, le joint n'est pas enfermé de tous côtés si bien que la pression du fluide intérieur peut le chasser dans un espace formé radialement vers l'extérieur.

Le brevet français n° 2 138 250 décrit un dispositif de raccordement dans lequel un joint torique est logé dans une gorge placée aussi à l'intérieur que possible puisqu'elle est délimitée sur une de ses faces par un bout mâle d'un tronçon de canalisation qui pénètre dans l'alésage du tronçon complémentaire. Ce brevet décrit donc un montage dans lequel la résultante 22 (figure 1) est réduite à une valeur pratiquement nulle. Cependant, là encore, le dispositif de fixation des deux parties du dispositif de raccordement exerce une force 24 très à l'extérieur par rapport au joint torique si bien que les forces appliquées par le fluide sous pression ont encore tendance à réduire l'étanchéité au niveau du joint. Dans l'application décrite dans ce brevet français, cette caractéristique n'est pas très importante car il s'agit de canalisations de très petit diamètre et de très forte épaisseur par rapport au diamètre si bien que l'étanchéité ne pose pratiquement pas de problème.

Par contre, les montages décrits précédemment deviennent totalement inopérants dans le cas de tronçons de tuyauterie de très grand diamètre. En effet, pour des raisons de réduction de l'encombrement, de réduction de poids et surtout de réduction de prix, il n'est pas envisageable d'utiliser des épaisseurs de matière encore supérieures à celles qui sont strictement nécessaires à la résistance aux forces importantes appliquées par le fluide sous pression. Ainsi, dans le cas de tronçons de tuyauterie de 508 mm de diamètre, contenant un fluide à une pression de service de 70 bars, la force d'écartement des deux tronçons, à la pression d'épreuve de 105 bars, est de $2,1.10^6$ N.

L'utilisation de techniques telles que décrites dans les brevets précités nécessiterait un surdimensionnement considérable des pièces. L'invention permet la résolution du problème posé non par le surdimensionnement des différents organes mais par suppression de ces couples de l'endroit où leur effet est le plus nuisible.

Plus précisément, selon l'invention, le couple qui a tendance à écarter les brides 14, 16 l'une de l'autre (figure 1), au niveau du joint 18, est supprimé à l'endroit de ce joint par application de la résultante 24 de manière que son axe recoupe le joint 18.

Plus précisément, si l'on considère l'ensemble des forces appliquées dans l'espace, le dispositif de raccordement selon l'invention est tel que le lieu des points d'application de la résultante des forces appliquées par un dispositif de maintien se trouve sur un cercle dont le diamètre est sensiblement égal au diamètre moyen de la gorge de logement du joint.

Plus précisément, l'invention concerne un dispositif de raccordement étanche de deux tronçons cylindriques creux, du type qui comprend

- une partie femelle délimitant un logement cylindrique dont le fond forme une première surface d'appui sensiblement perpendiculaire à l'axe du logement,

- une partie mâle ayant une seconde surface d'appui et destinée à pénétrer dans la partie femelle,

- au moins un joint d'étanchéité logé dans une gorge circulaire formée dans l'une des surfaces d'appui et destiné à être en contact étanche avec l'autre surface d'appui lorsque les parties mâle et femelle sont en coopération, et

- une bague de serrage destinée à immobiliser la partie mâle dans le logement de la partie femelle, par application de forces repoussant la partie mâle vers la surface d'appui de la partie femelle. Selon l'invention, lorsque les parties mâle et femelle sont immobilisées l'une par rapport à l'autre par la bague de serrage,

- les deux surfaces d'appui sont directement en contact et enferment de tous côtés le joint dans la gorge, et

- le lieu des points d'application de la résultante des forces appliquées par la bague de serrage à la partie mâle dans chaque plan axial, se trouve sur un cercle dont le diamètre est sensiblement égal au diamètre moyen de la gorge.

Il est avangageux que le diamètre moyen de la surface d'appui qui ne comprend pas la gorge soit aussi approximativement égal au diamètre moyen de la gorge.

Dans un mode de réalisation, la partie femelle a des portées qui dépassent vers l'intérieur du logement et la bague de serrage a des portées destinées à coopérer avec celles de la partie femelle, les portées étant régulièrement réparties au pourtour interne de la partie femelle et au pourtour externe de la bague afin qu'elles permettent un assemblage à baïonnette. Par exemple, les faces coopérantes des portées de la partie femelle et de la bague sont sous forme de rampes hélicoïdales. En outre, les portées de la partie femelle et celles de la bague peuvent avoir des longueurs différentes afin que l'une des portées dépasse de l'autre lorsqu'elles sont en position de blocage.

En outre, les surfaces hélicoïdales des rampes, considérées en coupe axiale, peuvent être inclinées par rapport à un plan transversal à l'axe de la partie femelle de manière telle que, lorsque la partie femelle et la bague sont en coopération, les portées de la partie femelle sont repoussées vers l'axe du logement.

Dans un autre mode de réalisation, la bague est vissée dans la partie femelle.

Il est aussi avantageux que la surface de la bague qui coopère avec la partie mâle et la surface de la partie mâle qui coopère avec la bague soient toutes deux tronconiques, de même angle au sommet, afin que le serrage du dispositif de raccordement provoque le centrage de la partie mâle et de la partie femelle l'une par rapport à l'autre.

Dans un autre mode de réalisation, les surfaces d'appui de la partie mâle et de la partie femelle peuvent être tronconiques, de même angle au sommet, afin que les parties mâle et femelle s'alignent automatiquement lors du serrage du dispositif de raccordement.

Il est aussi avantageux qu'un dispositif empêche la rotation de la bague par rapport à la partie femelle lorsque la bague a été serrée.

Selon une caractéristique avantageuse de l'invention, la bague de serrage est formée en plusieurs parties afin qu'elle puisse être mise en place sur un tube après le soudage de parties de dispositif de raccordement aux deux extrémités du tube.

D'autres caractéristiques et avantages de l'invention ressortiront mieux de la description qui va suivre, faite en référence aux dessins annexés sur lesquels, la figure 1 ayant déjà été décrite :

- la figure 2 est une perspective avec des parties arrachées d'un mode de réalisation de dispositif de raccordement selon l'invention, en position montée ;

- la figure 3 est une élévation latérale de la bague de serrage du dispositif de raccordement de la figure 2 ; et

- la figure 4 est une coupe axiale d'un autre mode de réalisation de dispositif de raccordement selon l'invention.

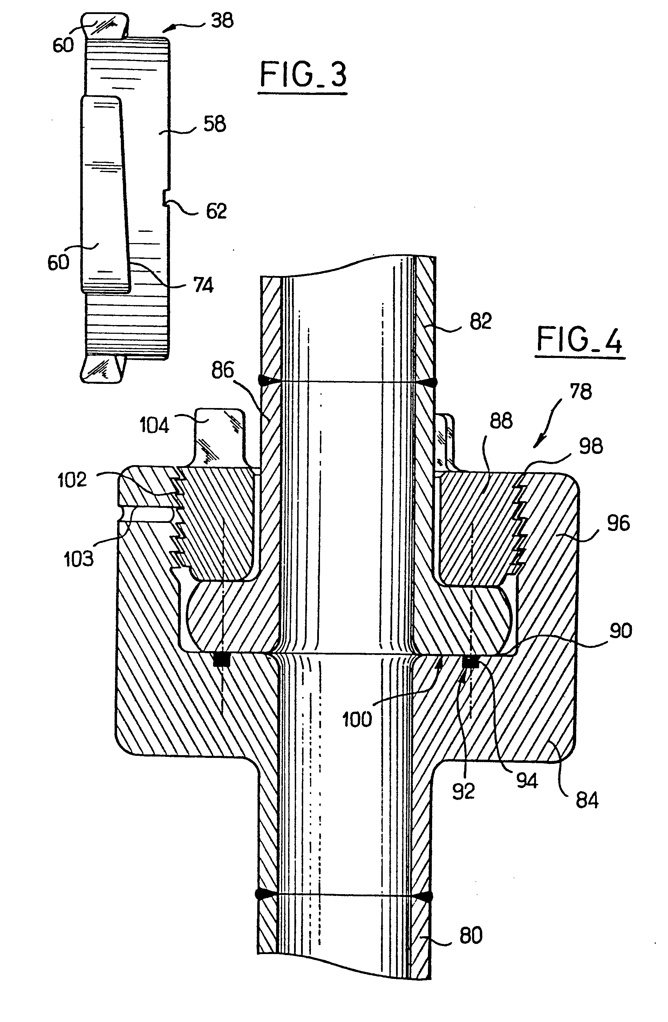

Le dispositif de raccordement représenté par les figures 2 et 3 repéré de façon générale par la référence 28 est destiné à raccorder deux tronçons 30, 32 de tuyauterie. Il comporte une partie femelle 34, une partie mâle 36 et une bague 38 de serrage. La partie femelle 34 qui, préalablement au raccordement, est soudée
en atelier au tronçon 30 comme indiqué par la référence
39, comporte une partie cylindrique 40    prolongeant le
tronçon 30 de tuyauterie, une partie 42 en forme de flasque, formant une surface d'appui interne 44 dans laquelle
est usinée une gorge 46 de forme circulaire et une partie
cylindrique externe 48. La partie externe ou manchon 48
a des portées 50 qui dépassent vers l'intérieur. Les surfaces des portées 50 qui sont tournées vers la surface 44
d'appui forment des rampes hélicoïdales.

La partie mâle 36 comporte une partie cylindrique 52 qui prolonge le tronçon 32 de tuyauterie auquel
elle est soudée comme indiqué par la référence 53. La partie mâle comporte en outre un collet 54 dépassant vers l'extérieur et délimitant une surface 56 d'appui destinée à
coopérer avec la surface d'appui 44 de la partie femelle.

La bague 38 de serrage a un corps cylindrique
58 ayant des portées 60 qui dépassent radialement vers
l'extérieur et des encoches 62 dans la face tournée axialement vers l'extérieur.

Le dispositif de raccordement comporte en outre
un joint torique 64 logé dans la gorge 46 de la partie
femelle 34.

Selon l'invention, les deux surfaces d'appui 44
et 56 des parties femelle et mâle 34 et 36 sont directement
en appui et enferment de tous côtés le joint torique 64.
En outre, les forces appliquées par la bague 38 au collet
54 de la partie mâle sont telles que, dans chaque plan de
coupe axiale, le point 66 d'application de la résultante 68
des forces appliquées par la bague 38 au collet  54
est à la  même distance de l'axe longitudinal 70 du dispositif de raccordement que le centre de la gorge 46. Ainsi,
l'axe 72 d'application de la composante parallèle à l'axe
70 de la résultante 68 des forces passe par le centre de
la gorge 46.

La figure 2 n'est pas à l'échelle. En effet, le
manchon 48 de la partie femelle a été représenté  très éloigné de l'extérieur du collet 54 afin que la coopération entre les portées 50 de la partie femelle et 60 de la bague de serrage apparaissent clairement. En réalité, les proportions sont celles de la figure 3 qui représente la seule bague de serrage, avec ses portées 60 qui délimitent des rampes hélicoïdales 74 destinées à coopérer avec les rampes hélicoïdales des portées 50.

Plus précisément, on note sur la figure 2 que les surfaces 76 de coopération des portées 50 de la partie femelle et des portées 60 de la bague sont inclinées par rapport à un plan transversal à l'axe 70 et descendent en se rapprochant de l'axe, dans la représentation de la figure 2, c'est-à-dire que, lors du serrage de la bague, les forces ont une composante parallèle à l'axe 70 du dispositif de raccordement mais aussi une composante radiale. Cette composante radiale est dirigée vers l'intérieur pour les portées 50 et vers l'extérieur pour les portées 60. Ainsi, lors du serrage de la bague, les portées 50 ont tendance à se rapprocher de l'axe 70 et s'opposent à l'écartement du manchon 48 de la partie femelle qui, travaillant ainsi à la compression, a une meilleure résistance mécanique. En outre, la bague se centre automatiquement par rapport aux portées de la partie femelle.

On doit noter en outre que, dans le mode de réalisation de la figure 2, les surfaces de coopération du collet 54 de la partie mâle 36 et de la bague 38 de serrage se trouvent sur un tronc de cône si bien que, lorsque la bague 38 est serrée sur la partie femelle 34, la partie mâle 36 a tendance à s'aligner automatiquement sur la partie femelle.

Lors de l'utilisation du dispositif de raccordement, la partie femelle 34 est soudée sur le tronçon 30 et la partie mâle 36 est soudée sur le tronçon 32 en atelier, après mise en place de la bague 38 sur le tronçon 32. Lorsque les tronçons sont alors raccordés sur place, la partie mâle est introduite dans la partie femelle et la bague est glissée afin que ses portées 60 soient alignées sur les espaces séparant les portées 50 de la partie femelle. Ensuite, une rotation de la bague 38 dans le sens convenable provoque la coopération des portées 50 et 60 et l'application de la partie mâle contre la partie femelle, avec serrage du joint d'étanchéité. Le raccord peut être verrouillé par perçage d'un trou 77 dans le manchon 48 et l'une des portées 60 et par introduction d'un goujon, ou par matage de l'extrémité dépassant de l'une des portées.

La figure 4 représente un autre mode de réalisation de l'invention dans lequel la bague de serrage coopère par vissage avec la partie femelle. Plus précisément, le dispositif 78 de raccordement selon l'invention est destiné à permettre la coopération de deux tronçons 80, 82 de tuyauterie. La partie femelle 84 qui est soudée sur le tronçon 80 délimite une surface 90 d'appui, perpendiculaire à l'axe longitudinal du dispositif 78 et dans laquelle est formée une gorge 92 qui loge un joint torique 94. La partie externe ou manchon 96 de la partie femelle 84 comporte un taraudage 98.

La partie mâle 86 délimite une surface 100 d'appui destinée à coopérer avec la surface 90 de la partie femelle.

La bague 88 de serrage a un filetage 102 complémentaire du taraudage 98 de la partie femelle. De préférence, il s'agit d'un filetage du type utilisé sur les pièces d'artillerie et capable de supporter des charges extrêmement élevées parallèlement à l'axe du dispositif de raccordement. La bague porte des saillies 104 qui dépassent de sa surface radiale externe et qui sont destinées à permettre le serrage de la bague 88.

Lors de l'utilisation du dispositif de raccordement selon l'invention, la partie femelle 84 est soudée sur le tronçon 80, en atelier, et la partie mâle 86 est soudée sur le tronçon 82, après mise en place de la bague 88 sur ce tronçon. Lorsque les tronçons 80 et 82 ont été amenés en place, la partie mâle est introduite dans la partie femelle et la bague 88 est serrée dans la partie femelle afin qu'elle vienne repousser la partie mâle contre la partie femelle. Après serrage, la bague 88 peut être verrouillée par rapport au manchon 96 par déformation localisée du filetage à l'aide d'un outil introduit par un trou 103 formé transversalement dans le manchon 96.

Bien entendu, de nombreuses variantes peuvent être apportées au dispositif de raccordement selon l'invention. Ainsi, dans le mode de réalisation des figures 2 et 3, le nombre de portées de la partie femelle et de la bague de serrage peut varier. Dans le mode de réalisation de la figure 4, le filetage 102 ou le taraudage 98 peut être discontinu ou non.

Dans le mode de réalisation des figures 2 et 3, on a indiqué que les surfaces de coopération de la bague et de la partie mâle étaient tronconiques et que les surfaces de coopération de la bague et de la partie femelle avaient des rampes hélicoïdales inclinées afin que la partie mâle soit centrée sur la partie femelle. Dans le mode de réalisation de la figure 4, on n'a décrit aucun dispositif de centrage automatique. Cependant, les différents modes de réalisation peuvent ou non comporter un tel dispositif de centrage, soit du type décrit en référence à la figure 2, soit d'un autre type. Par exemple, les surfaces d'appui de la partie mâle et de la partie femelle peuvent être elles-mêmes légèrement tronconiques et complémentaires afin qu'elles assurent elles-mêmes le centrage.

Bien qu'on ait décrit un joint d'étanchéité logé dans la partie femelle, il est bien entendu que la gorge peut aussi être formée dans la partie mâle.

On a indiqué que la bague de serrage 38 ou 88 était en une seule pièce. Cette caractéristique n'est pas indispensable. Il est en particulier commode d'utiliser des bagues de serrage en deux parties au moins afin que la bague puisse être montée sur un tronçon de tube portant un dispositif de raccordement après la soudure d'une partie mâle ou femelle sur le tronçon de tube. Il suffit que, après mise en place des différentes parties de la bague, celle-ci puisse assurer une application convenable des forces nécessaires contre le collet battu de la partie mâle. Par exemple, dans le mode de réalisation de la figure 2, la bague de serrage peut être simplement coupée diamétralement en deux parties, avec éventuellement des dispositifs d'articulation ou de centrage assurant la remise en position convenable des deux parties de la bague. Dans le mode de réalisation de la figure 4, la bague peut être aussi fendue diamétralement, et des dispositifs de centrage, par exemple en V, peuvent assurer la remise en position convenable des deux demi-bagues. Dans ce dernier mode de réalisation, il peut être avantageux que le filetage de la bague soit interrompu à proximité des surfaces de coopération des différentes parties de la bague.

Bien entendu, la partie mâle et/ou la partie femelle peuvent porter un revêtement diélectrique permettant la formation d'un raccord isolant.

Le dispositif de raccordement selon l'invention peut être éventuellement démonté sans détérioration autre que mineure ne faisant en aucun cas obstacle à son réemploi.

L'invention convient particulièrement bien au transport sous pression dans des canalisations de grand diamètre, de fluides tels que les hydrocarbures et le gaz naturel, et de matières solides telles que les minerais et le charbon, l'intérieur des canalisations pouvant alors porter un revêtement résistant à l'abrasion par des matières solides.

## REVENDICATIONS

1. Dispositif de raccordement étanche de deux tronçons cylindriques creux, du type qui comprend

- une partie femelle délimitant un logement cylindrique dont le fond forme une première surface d'appui sensiblement perpendiculaire à l'axe du logement,

- une partie mâle ayant une seconde surface d'appui et destinée à pénétrer dans la partie femelle,

- au moins un joint d'étanchéité logé dans une gorge circulaire formée dans l'une des surfaces d'appui et destiné à être en contact étanche avec l'autre surface d'appui lorsque les parties mâle et femelle sont en coopération, et

- une bague de serrage destinée à immobiliser la partie mâle dans le logement de la partie femelle par application de forces repoussant la partie mâle vers la surface d'appui de la partie femelle, le dispositif de raccordement étant caractérisé en ce que, lorsque les parties mâle (36) et femelle (34) sont immobilisées l'une par rapport à l'autre par la bague de serrage (38),

- les deux surfaces d'appui (44, 56) sont directement en contact et enferment de tous côtés le joint (64) dans la gorge (46), et

- le lieu des points (66) d'application de la résultante (68) des forces appliquées par la bague de serrage à la partie mâle, dans chaque plan axial, se trouve sur un cercle dont le diamètre est sensiblement égal au diamètre moyen de la gorge (46).

2. Dispositif selon la revendication 1, caractérisé en ce que le diamètre moyen de la surface d'appui (56) qui ne comprend pas la gorge (46) est approximativement égal au diamètre moyen de la gorge (46).

3. Dispositif selon l'une des revendications 1 et 2, caractérisé en ce que d'une part la partie femelle (34) a des portées (50) dépassant vers l'intérieur du logement et d'autre part la bague de serrage (38) a des portées (60) destinées à coopérer avec celles de la partie femelle (34), les portées étant régulièrement réparties au pourtour interne de la partie femelle et au pourtour externe de la bague afin qu'elles permettent un assemblage à baïonnette.

4. Dispositif selon la revendication 3, caractérisé en ce que les faces coopérantes des portées (50, 60) de la partie femelle (34) et de la bague (38) sont sous forme de rampes hélicoïdales (74).

5. Dispositif selon la revendication 4, caractérisé en ce que les portées (50) de la partie femelle (34) et les portées (60) de la bague (38) ont des longueurs différentes afin que l'une des portées dépasse de l'autre lorsqu'elles sont en position de blocage.

6. Dispositif selon la revendication 5, caractérisé en ce que les surfaces hélicoïdales des rampes (74), considérées en coupe axiale, sont inclinées par rapport à un plan transversal à l'axe de la partie femelle (34), l'inclinaison étant telle que, lorsque la partie femelle (34) et la bague (38) sont en coopération, les portées (50) de la partie femelle (34) sont repoussées vers l'axe (70) du logement.

7. Dispositif selon l'une des revendications 1 et 2, caractérisé en ce que la bague (88) est vissée dans la partie femelle (84).

8. Dispositif selon l'une quelconque des revendications précédentes, caractérisé en ce que la surface de la bague (38) qui coopère avec la partie mâle (36) et la surface de la partie mâle (36) qui coopère avec la bague (38) sont toutes deux tronconiques et ont un même angle au sommet, si bien que le serrage du dispositif de raccordement provoque le centrage de la partie mâle (36) et de la partie femelle (34) l'une par rapport à l'autre.

9. Dispositif selon l'une quelconque des revendications 1 à 7, caractérisé en ce que les surfaces d'appui (56, 44) de la partie mâle (36) et de la partie femelle (34) sont tronconiques, de même angle au sommet, si bien que les parties mâle et femelle s'alignent automatiquement lors du serrage du dispositif de raccordement.

10. Dispositif selon l'une quelconque des revendications précédentes, caractérisé en ce qu'il comporte un dispositif (77) empêchant la rotation de la bague (38) par rapport à la partie femelle (34) lorsqu'elles ont été serrées l'une contre l'autre.

11. Dispositif selon l'une quelconque des revendications précédentes, caractérisé en ce que la bague de serrage est formée de plusieurs parties afin qu'elle puisse être mise en place sur un tube après le soudage de parties de dispositifs de raccordement aux deux extrémités du tube.

12. Tronçon de canalisation, caractérisé en ce qu'il porte, à au moins l'une de ses extrémités, une partie mâle (36) ou une partie femelle (34) d'un dispositif de raccordement selon l'une quelconque des revendications précédentes.

FIG_1

FIG_2

FIG_3

FIG_4

Office européen
des brevets

**RAPPORT DE RECHERCHE EUROPEENNE**

| Catégorie | Citation du document avec indication, en cas de besoin, des parties pertinentes | Revendica-tion concernée |
|---|---|---|
| X | FR - A - 1 436 038 (R. PONS)<br><br>* figures 1,2 *<br><br>-- | 1-6,9, 12 |
| D,X | FR - A - 2 138 250 (BAZIN)<br><br>* page 1, lignes 1-7; page 2, lignes 26-31; figures 1-3 *<br><br>-- | 1,7,12 |
| D,X | GB - A - 820 113 (HOPKINS)<br><br>* page 1, lignes 35-79; figure 1 *<br><br>-- | 1,2,7, 12 |
|  | US - A - 1 843 394 (LANGE)<br><br>* figures 1-6 *<br><br>--- | 1,3,5, 6,10, 12 |
|  | US - A - 1 893 132 (CROSLEN)<br><br>* figures 1-3 *<br><br>-- | 1,7,12 |
|  | FR - A - 2 155 433 (LIEBHERR-WERK)<br><br>* page 5, lignes 20-37; page 6, lignes 1-14; figures 1-2 *<br><br>--------- | 1,12 |

**DOCUMENTS CONSIDERES COMME PERTINENTS**

**CLASSEMENT DE LA DEMANDE (Int. Cl.³)**

F 16 L 37/10
37/24

**DOMAINES TECHNIQUES RECHERCHES (Int. Cl.³)**

F 16 L

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 23-02-1981 | ANGIUS |

OEB Form 1503.1   06.78